# EUROPÄISCHE PATENTANMELDUNG

(11) **EP 2 957 197 A1**
(43) Veröffentlichungstag der Anmeldung: **23.12.2015**
(21) Anmeldenummer: 15172374.9
(22) Anmeldetag: 16.06.2015
(51) Int. Cl.: A47G 29/14, G07C 9/00, G06Q 10/08

(54) **VERFAHREN ZUM BETRIEB EINER AUFNAHMEEINRICHTUNG FÜR INSBESONDERE GROSSVOLUMIGE POSTSENDUNGEN WIE PAKETE**

(30) Priorität: 17.06.2014 DE 102014108534; 18.06.2014 DE 102014108620
(71) Anmelder: BURG-WÄCHTER KG, 58540 Meinerzhagen (DE)
(72) Erfinder:
(74) Vertreter: Stenger Watzke Ring

(57) **Zusammenfassung**

Die vorliegende Erfindung betrifft ein Verfahren zum Betrieb einer Aufnahmeeinrichtung für insbesondere großvolumige Postsendungen wie Pakete, wobei ein Versender einer Postsendung eine Postdienstleistung unter Verwendung der Aufnahmeeinrichtung bei einem Hintergrundsystem anmeldet, wobei das Hintergrundsystem die angemeldete Postdienstleistung mit der Aufnahmeeinrichtung verknüpft und ein Auftrag für die Postdienstleistung an einen oder mehrere Logistikdienstleister übermittelt wird, wobei dem Logistikdienstleister, einem Empfänger und/oder dem Versender ein Schlüssel zum Öffnen und/oder Schließen der Aufnahmeeinrichtung übermittelt wird, wobei der Schlüssel nach einer Ausführung der Postdienstleistung für eine weitere Verwendung automatisch gesperrt wird.

## Beschreibung

Die Erfindung betrifft ein Verfahren zum Betrieb einer Aufnahmeeinrichtung für insbesondere großvolumige Postsendungen wie Pakete.

Derartige Verfahren sind an sich aus dem Stand der Technik bekannt. Es handelt sich hierbei beispielsweise um Verfahren zum Betrieb von Paketboxen. Bei diesen stellt ein Logistikdienstleister ausschließlich für seine eigenen Kunden Paketboxen bereit, in welchen die Kunden Pakete sowohl empfangen als auch aufgeben können.

Soll ein Paket beispielsweise aufgegeben werden, läuft das Verfahren wie folgt ab. Der Kunde bezahlt zunächst das Porto bei dem Logistikdienstleister, welcher die Aufnahmeeinrichtung betreibt. Anschließend legt er die Postsendung in die Aufnahmeeinrichtung ein. Die Postsendung wird dann von dem die Aufnahmeeinrichtung betreibenden Logistikdienstleister abgeholt und an den Empfänger zugestellt.

Soll ein Paket empfangen werden, verschickt der Versender, beispielsweise ein Online-Versandhaus, das Paket an eine spezielle Adresse, welche mit dem Empfänger der Sendung verknüpft ist und ausschließlich der Aufnahmeeinrichtung eines bestimmten Logistikdienstleisters zugeordnet ist.

Wenngleich sich die bekannten Verfahren dem Grunde nach bewährt haben, besteht noch Verbesserungsbedarf. So ist es bei den bekannten Verfahren bislang nicht möglich, dass ein Versender bzw. Empfänger ein und dieselbe Aufnahmeeinrichtung zur Aufgabe von Postsendungen unter Inanspruchnahme unterschiedlicher Logistikdienstleister benutzen kann.

Es ist folglich die Aufgabe der vorliegenden Erfindung, ein gattungsgemäßes Verfahren dahingehend weiterzuentwickeln, dass ein und dieselbe Aufnahmeeinrichtung zum Empfang und/oder zur Aufgabe von Postsendungen unter Verwendung unterschiedlicher Logistikdienstleister ermöglicht wird.

Zur Lösung schlägt die Erfindung vor, dass ein Versender einer Postsendung eine Postdienstleistung unter Verwendung der Aufnahmeeinrichtung bei einem Hintergrundsystem anmeldet, wobei das Hintergrundsystem die angemeldete Postdienstleistung mit der Aufnahmeeinrichtung verknüpft und ein Auftrag für die Postdienstleistung an einen oder mehrere Logistikdienstleister übermittelt wird, wobei dem Logistikdienstleister, einem Empfänger und/oder dem Versender ein Schlüssel zum Öffnen und/oder Schließen der Aufnahmeeinrichtung übermittelt wird, wobei der Schlüssel nach einer Ausführung der Postdienstleistung für eine weitere Verwendung automatisch gesperrt wird.

Der Versender kann eine Person sein, welcher die Aufnahmeeinrichtung unmittelbar räumlich zugeordnet ist, beispielsweise ein Wohnungsbesitzer, welcher die Aufnahmeeinrichtung in der Nähe seiner Wohnung stehen hat. Das erfindungsgemäße Verfahren betrifft dann insbesondere den Versand von Postsendungen mittels der Aufnahmeeinrichtung. Das erfindungsgemäße Verfahren kann sich dann dadurch auszeichnen, dass ein Versender eine Postsendung in die Aufnahmeeinrichtung einlegt und anschließend die Aufnahmeeinrichtung schließt, wobei ein Hintergrundsystem die eingelegte Postsendung registriert und einen Abholauftrag an einen oder mehrere Logistikdienstleister übermittelt, wobei dem oder den Logistikdienstleistern ein Schlüssel zum Öffnen der Aufnahmeeinrichtung übermittelt wird, wobei der Schlüssel nach einer Entnahme der Postsendung aus der Aufnahmeeinrichtung für eine weitere Verwendung automatisch gesperrt wird.

Der Versender kann aber auch von der Aufnahmeeinrichtung entfernt sein, wobei das erfindungsgemäße Verfahren dann insbesondere den Empfang von Postsendungen mit der Aufnahmeeinrichtung betrifft.

Eine Postdienstleistung umfasst bezüglich einer Postsendung die Abholung, den Transport, die Zustellung und/oder dergleichen.

Sofern von einem Verwender die Rede ist, sind damit der oder die Logistikdienstleister, der Empfänger und/oder der Versender gemeint.

Ein Kerngedanke des erfindungsgemäßen Verfahrens liegt nun darin, ein Hintergrundsystem vorzusehen, welches einen Schlüssel zum Öffnen der Aufnahmeeinrichtung an einen oder mehrere Logistikdienstleister, den Empfänger und/oder den Versender übermittelt. Bei diesem Hintergrundsystem kann es sich um eine Rechnereinheit handeln. Sie kann einen Mikroprozessor, einen Speicher, eine Kommunikationsschnittstelle und/oder dergleichen aufweisen. Erfindungsgemäß dient das Hintergrundsystem zur Schlüsselverwaltung. Das Hintergrundsystem entscheidet, wer einen Schlüssel zum Zugriff auf die Aufnahmeeinrichtung übermittelt bekommt. Das Hintergrundsystem entscheidet zudem, welche Gültigkeit der Schlüssel hat. Es kann sich hierbei beispielsweise um eine quantitative oder zeitliche Gültigkeit handeln. Das Hintergrundsystem kann zudem dazu vorgesehen sein, die mit der Inanspruchnahme einer Postdienstleistung verbundenen Gebühren abzurechnen. Der Versender kann somit eine Postsendung ohne vorherige Entrichtung einer Gebühr in die Aufnahmeeinrichtung einlegen. Die Gebühr kann erst dann fällig werden und/oder abgerechnet werden, wenn ein Logistikdienstleister die Postsendung tatsächlich abholt. Hierdurch kann die Berechnung der Gebühr in neuartiger Weise durchgeführt werden, beispielsweise in Abhängigkeit der Zeitdauer zwischen dem Einlegen der Postsendung in die Aufnahmeeinrichtung und der Abholung durch den Logistikdienstleister und/oder dergleichen.

Erfindungsgemäß wird der Schlüssel nach einer Ausführung der Postdienstleistung, beispielsweise der Abholung durch Entnahme der Postsendung aus der Aufnahmeeinrichtung, für eine weitere Verwendung automatisch gesperrt. Dadurch kann verhindert werden, dass ein unberechtigter Zugriff auf die Aufnahmeeinrichtung erfolgt, beispielsweise wenn bereits ein anderer Versender oder Logistikdienstleister eine ganz andere Postsendung in die Aufnahmeeinrichtung eingelegt hat. Erfindungsgemäß ist es somit vorgesehen, dass ein Schlüssel immer nur zum Einlegen und/oder zur Entnahme einer ganz bestimmten Postsendung in bzw. aus der Aufnahmeeinrichtung verwendet werden kann.

Bei dem Schlüssel handelt es sich vorzugsweise um einen Datensatz. Dieser Datensatz wird insbesondere vom Hintergrundsystem an den oder die Logistikdienstleister, den Empfänger und/oder den Versender übermittelt. Die Logistikdienstleister, der Empfänger und/oder der Versender weisen vorzugsweise mobile Endgeräte auf. Diese können den Schlüssel bzw. den Datensatz lesen. Der Datensatz ist vorzugsweise derart ausgebildet, dass er von unterschiedlichen mobilen Endgeräten gelesen werden kann. Denkbar ist, dass eine Art Standardprotokoll definiert ist, wobei die Hersteller ganz unterschiedlicher mobiler Endgeräte sicherstellen können, dass ihre Geräte dieses Protokoll unterstützen. Dadurch sind beispielsweise die einzelnen Logistikdienstleister in der Wahl eines für ihren Einsatzzweck geeigneten mobilen Endgeräts weitestgehend frei, solange das mobile Endgerät den Datensatz lesen kann.

Der Schlüssel, insbesondere das mobile Endgerät, und/oder die Aufnahmeeinrichtung können eine Bluetooth-, RFID- und/oder NFC-Schnittstelle aufweisen. Sie können über eine oder mehrere dieser Schnittstellen miteinander kommunizieren.

Der Datensatz wird vorzugsweise in unterschiedlich ausgebildeten mobilen Endgeräten empfangen und gelesen. Die Aufnahmeeinrichtung weist vorzugsweise eine Kommunikationsschnittstelle auf, mit welcher sie mit unterschiedlich ausgebildeten mobilen Endgeräten kommunizieren kann. Die Logistikdienstleister, die Versender und/oder die Empfänger können somit ihr jeweiliges mobiles Endgerät verwenden, um die Aufnahmeeinrichtung zu öffnen und/oder zu schließen. Die Aufnahmeeinrichtung weist vorzugsweise ein elektronisches Schloss auf.

Das Registrieren einer in die Aufnahmeeinrichtung eingelegten Postsendung kann durch eine manuelle Eingabe des Versenders beispielsweise an der Aufnahmeeinrichtung, einem Sensor in der Aufnahmeeinrichtung zur Überwachung des Aufnahmeraums und/oder dergleichen erfolgen.

Mit dem erfindungsgemäßen Verfahren wird es erstmals möglich, dass eine Aufnahmeeinrichtung nicht nur speziell von einem ganz bestimmten Logistikdienstleister betrieben werden kann, sondern dass dem Grunde nach beliebig viele unterschiedliche Logistikdienstleister Zugriff auf ein und dieselbe Aufnahmeeinrichtung haben können. Dies wird durch die erfindungsgemäße Schlüsselverwaltung durch das Hintergrundsystem ermöglicht. Durch diese Schlüsselverwaltung ist sichergestellt, dass nur berechtigte Zugriffe auf die Aufnahmeeinrichtung erfolgen. Das erfindungsgemäße Verfahren hat insbesondere für den Empfänger und/oder Versender Vorteile, da er besonders frei zwischen verschiedenen Logistikdienstleistern wählen kann. Die vorhandenen Verfahren erschweren eine solche Wahlmöglichkeit, da jeweils gezielt eine Aufnahmeeinrichtung bzw. eine Aufgabestelle des jeweiligen Logistikdienstleisters angesteuert werden muss. Diese können örtlich kilometerweit auseinander liegen. Die technische Lösung des erfindungsgemäßen Verfahrens ermöglicht es hingegen, dass ein Wettbewerb zwischen den Logistikdienstleistern angeregt wird, was für den Verwender Preissenkungen, Qualitätsverbesserungen, schnellere Zustellung und/oder dergleichen mit sich bringen kann.

Erfindungsgemäß wird der Schlüssel für eine weitere Verwendung automatisch gesperrt. Dies kann dadurch realisiert werden, dass nach einer Entnahme und/oder einem Einlegen der Postsendung aus der Aufnahmeeinrichtung der Schlüssel lokal in der Aufnahmeeinrichtung selbst für eine weitere Verwendung automatisch gesperrt wird. Dies hat den Vorteil, dass die Sperrung des Schlüssels nicht durch eine zentrale Stelle erfolgen muss, was eine entsprechende Datenverbindung und/oder dergleichen voraussetzen würde, was wiederum eine gewisse Fehleranfälligkeit bei Unterbrechung der Datenverbindung mit sich bringen würde. Es ist vielmehr die Aufnahmeeinrichtung selbst, welche lokal den Schlüssel sperrt. Ein erneutes Öffnen der Aufnahmeeinrichtung unter Verwendung desselben Schlüssels ist dann nicht mehr möglich. Dadurch wird eine Manipulation weitestgehend ausgeschlossen.

Der Schlüssel kann aber auch nach einem Einlegen und/oder einer Entnahme der Postsendung aus der Aufnahmeeinrichtung durch das Hintergrundsystem für eine weitere Verwendung automatisch gesperrt werden. Bei dieser Variante kann vorgesehen sein, dass ein Öffnen der Aufnahmeeinrichtung mit dem Schlüssel voraussetzt, dass eine Kommunikationsverbindung mit dem Hintergrundsystem besteht. Die Kommunikationsverbindung kann zwischen einem mobilen Endgerät beispielsweise des Logistikdienstleisters und/oder der Aufnahmeeinrichtung einerseits und dem Hintergrundsystem andererseits ausgebildet werden. Dies hat den Vorteil, dass sichergestellt ist, dass ein Öffnen der Aufnahmeeinrichtung zwingend auch zu einer Sperrung des Schlüssels durch das Hintergrundsystem führt.

Das Hintergrundsystem kann nach einem Einlegen und/oder einer Entnahme der Postsendung aus der Aufnahmeeinrichtung automatisch einen Sperrbefehl für den verwendeten Schlüssel an den Verwender übermitteln. Bei dem Sperrbefehl kann es sich um einen Datensatz handeln. Dieser Datensatz wird automatisiert beispielsweise in einem mobilen Endgerät des Verwenders empfangen, gelesen und ausgewertet. Das Auswerten kann dazu führen, dass der gelesene Sperrbefehl in Form eines Datensatzes automatisch dazu führt, dass ein eventuell noch vorhandener Schlüssel in Form eines Datensatzes unmittelbar gesperrt wird. Dies hat den Vorteil, dass Manipulationen weiter ausgeschlossen werden können.

Die zuvor beschriebenen Möglichkeiten zur automatischen Sperrung des Schlüssels können im Rahmen einer Weiterbildung auch miteinander kombiniert werden.

Gemäß einer vorteilhaften Weiterbildung der Erfindung übermittelt das Hintergrundsystem an den oder die Logistikdienstleister, den Versender und/oder den Empfänger einen Basisschlüssel, wobei ein Zugriff auf die Aufnahmeeinrichtung eine Kombination des Schlüssels mit dem Basisschlüssel erfordert. Der Basisschlüssel kann in Form eines Datensatzes vorliegen. Der Basisschlüssel kann auf ein mobiles Endgerät des Verwenders übertragen werden. Im mobilen Endgerät können der Datensatz des Basisschlüssels und der Datensatz des Schlüssels zu einem gemeinsamen Datensatz kombiniert werden. Der Basisschlüssel dient dazu, einen Logistikdienstleister bzw. das mobile Endgerät eines Logistikdienstleisters grundsätzlich überhaupt als zum Zugriff auf die Aufnahmeeinrichtung autorisiert auszuweisen. Dies bedeutet mit anderen Worten, dass der Schlüssel selbst ohne den Basisschlüssel nutzlos ist. Dadurch können weitere Manipulationsmöglichkeiten ausgeschlossen werden. Mit anderen Worten autorisiert der Basisschlüssel dazu, grundsätzlich überhaupt in einem erfindungsgemäßen Verfahren teilnehmen zu dürfen. Der Basisschlüssel kann eine zeitlich festgelegte Gültigkeit aufweisen. Diese zeitlich festgelegte Gültigkeit kann beispielsweise einen Zeitraum von einer Woche, einem Monat, einem Jahr und/oder dergleichen betragen. Nach Ablauf muss ein neuer Basisschlüssel angefordert werden. Dadurch kann sichergestellt werden, dass ein eventuell verlorengegangener Basisschlüssel, beispielsweise ein mit einem entsprechenden Datensatz versehenes mobiles Endgerät, nach Zeitablauf automatisch für eine Teilnahme im erfindungsgemäßen Verfahren nutzlos wird. Dadurch können Manipulationen weiter verhindert werden.

Gemäß einer vorteilhaften Weiterbildung der Erfindung werden dem Versender und/oder Empfänger mehrere unterschiedliche Logistikdienstleister zur Auswahl angeboten. Die Aufnahmeeinrichtung kann über eine Bedieneinrichtung verfügen. Mittels dieser Bedieneinrichtung kann der Verwender ganz gezielt einen bestimmten Logistikdienstleister auswählen. Das bedeutet mit anderen Worten, dass das erfindungsgemäße Verfahren den Verwender nicht zwingt, einen nicht vorhersehbaren Logistikdienstleister zu verwenden, sondern dem Verwender lediglich diese Möglichkeit bietet.

Darüber hinaus betrifft die Erfindung ein Verfahren zum Betrieb einer Aufnahmeeinrichtung für insbesondere großvolumige Postsendungen wie Pakete, wobei ein Versender eine Postsendung in die Aufnahmeeinrichtung einlegt, wobei anschließend einem Empfänger und/oder dem Versender ein Schlüssel zum Öffnen der Aufnahmeeinrichtung übermittelt wird, und wobei der Empfänger und/oder der Versender anschließend den Schlüssel an zumindest einen Logistikdienstleister aus einer Vielzahl von Logistikdienstleistern übermittelt, und wobei der Logistikdienstleister anschließend mittels des Schlüssels die Aufnahmeeinrichtung öffnet und die Postsendung entnimmt.

Im Hinblick auf die Aufnahmeeinrichtung, die Postsendung, den Versender, den Empfänger, den Schlüssel und den Logistikdienstleister gilt das vorstehend bereits Ausgeführte.

Der Clou dieser Erfindung besteht darin, dass unkompliziert vom Versender und/oder vom Empfänger gezielt zumindest ein Logistikdienstleister aus einer Vielzahl von Logistikdienstleistern ausgewählt werden kann, welcher dann die Postdienstleistung übernehmen soll. So kann der Versender beispielsweise einen solchen Logistikanbieter auswählen, mit welchem er in der Vergangenheit persönlich gute Erfahrungen gemacht hat, welcher beispielsweise eine angemessene Transportversicherung und/oder dergleichen anbietet. Auf der anderen Seite kann auch der Empfänger die Wahl des Logistikdienstleisters übernehmen, beispielsweise dahingehend, welcher Logistikdienstleister sich bei ihm vor Ort als besonders zuverlässig erwiesen hat oder mit welchem Logistikdienstleister er beispielsweise eine besondere Geschäftsbeziehung unterhält, beispielsweise in Form einer vom Logistikdienstleister bereitgestellten Empfangseinrichtung für Postsendungen und/oder dergleichen. Insofern wird mit der Erfindung ein erheblicher Komfortgewinn beim Versenden bzw. beim Empfangen von Postsendungen erreicht.

Gemäß einer vorteilhaften Weiterbildung wird der Schlüssel zunächst an den Versender übermittelt, wobei der Versender den Schlüssel anschließend an den Empfänger übermittelt.

Der Vorteil dieser Weiterbildung liegt darin, dass eine zusätzliche Sicherheitsstufe implementiert wird. Der Versender kann vor einer Übermittlung des Schlüssels den Empfänger noch einmal überprüfen, ob die richtige Sendung eingelegt worden ist, der richtige Empfänger ausgewählt worden ist und/oder dergleichen. Es ist auch eine Art Zugum-Zug-Übergabeverfahren denkbar. Demgemäß ist vorgesehen, dass die Aufnahmeeinrichtung nach dem Einlegen einer Postsendung und Verschließen für den Versender selbst gesperrt ist. Der Empfänger kann dann, beispielsweise von dem Hintergrundsystem, eine Nachricht über das erfolgte Einlegen der Postsendung erhalten. Anschließend kann der Empfänger beispielsweise eine Bezahlung der zu versendenden Postsendung und/oder eine Bezahlung etwaiger Versandkosten veranlassen. Hat den Versender eine entsprechende Zahlung erreicht, kann er dann im nächsten Schritt den Schlüssel an den Empfänger übermitteln.

Gemäß einer vorteilhaften Weiterbildung wird der Schlüssel unmittelbar, insbesondere von einem zuvor beschriebenen Hintergrundsystem, an den Empfänger übermittelt.

Durch diese Weiterbildung lässt sich insbesondere der Aufwand für den Versender reduzieren, was ebenfalls einer Verbesserung der Handhabung und Nutzerfreundlichkeit zugutekommt.

Gemäß einer vorteilhaften Weiterbildung wird der Schlüssel automatisch nach dem Einlegen der Postsendung in die Aufnahmeeinrichtung, insbesondere automatisch nach einem Verschließen der Aufnahmeeinrichtung übermittelt.

Gemäß einer vorteilhaften Weiterbildung wählt der Empfänger und/oder Versender mittels eines insbesondere mobilen Endgeräts einen Logistikdienstleister aus der Vielzahl von Dienstleistern aus.

Bei dem Endgerät kann es sich um ein Smartphone, einen Tabletcomputer, einen Personalcomputer und/oder dergleichen handeln, entscheidend ist, dass das Endgerät über eine Benutzerschnittstelle und eine Anzeigeeinrichtung zur Interaktion mit dem Nutzer, das heißt dem Empfänger und/oder Versender, verfügt.

Weitere Vorteile und Merkmale der Erfindung ergeben sich anhand der nachfolgenden Figurenbeschreibung. Es zeigen:
- Fig. 1: schematisch das Zusammenwirken der Komponenten einer Ausführungsform des erfindungsgemäßen Verfahrens;
- Fig. 2: beispielhaft einen Ablaufplan einer Ausführungsform des erfindungsgemäßen Verfahrens; und
- Fig. 3: beispielhaft eine weitere Variante eines erfindungsgemäßen Verfahrens; und
- Fig. 4: beispielhaft eine weitere Variante eines erfindungsgemäßen Verfahrens.

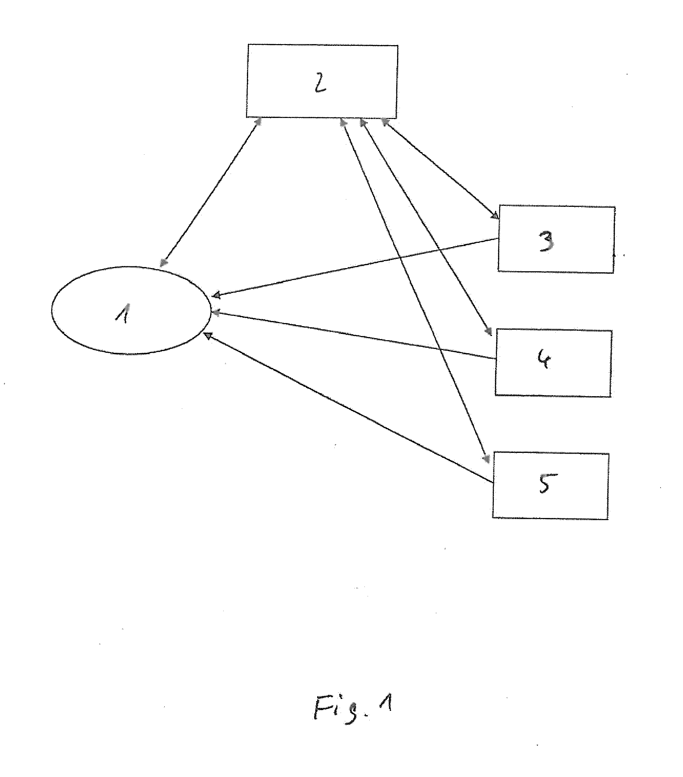

Figur 1 zeigt beispielhaft das Zusammenwirken verschiedener Komponenten bei einer Ausführungsform des erfindungsgemäßen Verfahrens. Es ist eine Aufnahmeeinrichtung 1 vorgesehen, welche der Aufnahme von insbesondere großvolumigen Postsendungen wie Paketen, Päckchen und/oder dergleichen dient. Es kann sich hierbei um eine Art Paketbox, großen "Briefkasten" und/oder dergleichen handeln. Die Aufnahmeeinrichtung 1 weist vorzugsweise ein elektronisches Schloss zum Verschließen einer Tür sowie wenigstens eine datentechnische Kommunikationsschnittstelle auf.

Es ist ein Hintergrundsystem 2 vorgesehen. Dieses kann örtlich von der Aufnahmeeinrichtung 1 beabstandet angeordnet sein. Das Hintergrundsystem 2 umfasst eine Rechnereinheit. Diese kann einen Mikroprozessor, einen Speicher, eine Datenbank, eine datentechnische Kommunikationsschnittstelle und/oder dergleichen aufweisen. Die Aufnahmeeinrichtung 1 und das Hintergrundsystem 2 sind derart ausgebildet, dass sie datentechnisch miteinander kommunizieren können, insbesondere bidirektional.

Es sind zudem drei unterschiedliche Logistikdienstleister 3, 4, 5 vorgesehen. Hierbei kann es sich um von Menschen gesteuerte Fahrzeuge, fahrerlose Transportsysteme, Transportdrohnen und/oder dergleichen handeln. Es kann sich ganz allgemein um eine Postsendungstransporteinrichtung handeln. Die Logistikdienstleister 3, 4, 5 dienen dazu, Postsendungen wie Pakete aus der Aufnahmeeinrichtung 1 abzuholen bzw. zu entnehmen und weiterzuverarbeiten. Diese Weiterverarbeitung kann den Transport in ein Logistikzentrum, eine direkte Zustellung an den Empfänger und/oder dergleichen umfassen.

Die Logistikdienstleister 3, 4, 5 weisen eine Kommunikationseinrichtung, beispielsweise in Form eines mobilen Endgeräts auf. Mittels dieser Kommunikationseinrichtung können die Logistikdienstleister 3, 4, 5 mit dem Hintergrundsystem 2 und/oder der Aufnahmeeinrichtung 1 datentechnisch kommunizieren. Damit kann beispielsweise ein elektronisches Schloss der Aufnahmeeinrichtung 1 angesteuert werden.

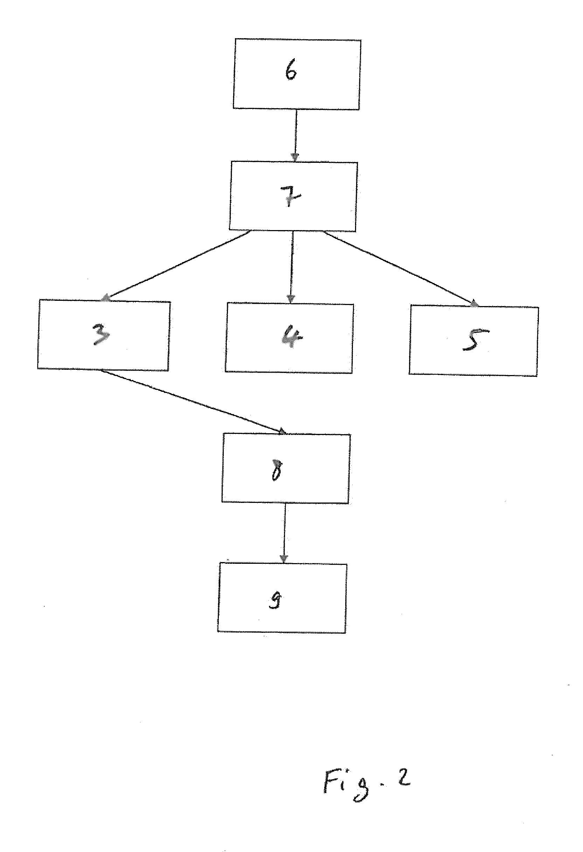

Ein beispielhafter Verfahrensablauf einer Ausführungsform des erfindungsgemäßen Verfahrens ist in Figur 2 dargestellt. Der Verfahrensablauf wird mit Bezug auf die Figuren 2 und 1 im Folgenden beschrieben.

Ein Verwender legt im Schritt 6 eine Postsendung, beispielsweise ein Paket, in die Aufnahmeeinrichtung ein. Hierzu öffnet er beispielsweise eine Tür der Aufnahmeeinrichtung 1, legt die Sendung ein und schließt die Aufnahmeeinrichtung 1 anschließend. Ein elektronisches Schloss der Aufnahmeeinrichtung 1 kann automatisch verwinkeln. Eine einmal eingelegte Postsendung kann dann nicht mehr ohne Weiteres aus der Aufnahmeeinrichtung 1 entnommen werden.

Im anschließenden Schritt 7 wird das Einlegen einer Postsendung im Schritt 6 registriert. Dies kann durch das Hintergrundsystem 2 erfolgen. Die Aufnahmeeinrichtung 1 bzw. eine entsprechende datentechnische Kommunikationsschnittstelle übermittelt an das Hintergrundsystem 2 die Information, dass eine Sendung eingelegt wurde und zur Abholung bereitsteht.

Nachdem die eingelegte Postsendung registriert wurde, werden Abholaufträge an die drei Logistikdienstleister 3, 4, 5 übermittelt Es handelt sich hierbei um unterschiedliche Logistikdienstleister 3, 4, 5. Diese können in einem Wettbewerb zueinander stehen und um entsprechende Abholaufträge buhlen.

Es sind vielfältige Möglichkeiten denkbar, wie einer der Logistikdienstleister 3, 4, 5 den Zuschlag für einen Abholauftrag erhält. Beispielsweise kann der Logistikdienstleister 3, 4, 5 mit der günstigsten Gebühr, der schnellsten Zustellung und/oder dergleichen den Zuschlag erhalten. Das Hintergrundsystem 2 kann dies automatisiert berechnen. Vorzugsweise sind jedoch alle drei Logistikdienstleister 3, 4, 5 parallel dazu autorisiert, die Postsendung abzuholen. Hierzu wird den drei Logistikdienstleistern 3, 4, 5 ein Schlüssel vom Hintergrundsystem übermittelt. Dieser kann in Form eines Datensatzes vorliegen, welcher beispielsweise von mobilen Endgeräten der Logistikdienstleister 3, 4, 5 empfangen und gelesen werden kann.

Vorliegend erreicht beispielsweise der Logistikdienstleister 3 zuerst die Aufnahmeeinrichtung 1. Der Logistikdienstleister 3 öffnet die Aufnahmeeinrichtung mit Hilfe einer datentechnischen Kommunikationsverbindung, beispielsweise unter Verwendung des mobilen Endgeräts. Im Schritt 8 wird folglich der dem Logistikdienstleister 3 zuvor übermittelte Schlüssel verwendet, um die Aufnahmeeinrichtung zu öffnen. Erfindungsgemäß ist nun vorgesehen, dass der Schlüssel, welchen ja die beiden Logistikdienstleister 4, 5 immer noch haben, für eine weitere Verwendung automatisch gesperrt wird. Dies geschieht im Schritt 9. Hierbei kann in der Aufnahmeeinrichtung 1 der zuvor verwendete Schlüssel lokal für eine weitere Benutzung gesperrt werden. Ergänzend oder alternativ kann die Verwendung des Schlüssels dem Hintergrundsystem 2 gemeldet werden. Das Hintergrundsystem 2 kann daraufhin zum Einen den zuvor bereits verwendeten Schlüssel durch Übertragen eines entsprechenden Datensatzes an die Logistikdienstleister 4, 5 bei diesen Sperren, beispielsweise durch Löschen oder Ungültigmachen innerhalb der mobilen Endgeräte. Zusätzlich kann das Hintergrundsystem 2 den Logistikdienstleistern 4, 5 die Information übermitteln, dass der zuvor übermittelte Abholauftrag nicht mehr zur Verfügung steht, da bereits der Logistikdienstleister 3 den Zuschlag erhalten hat.

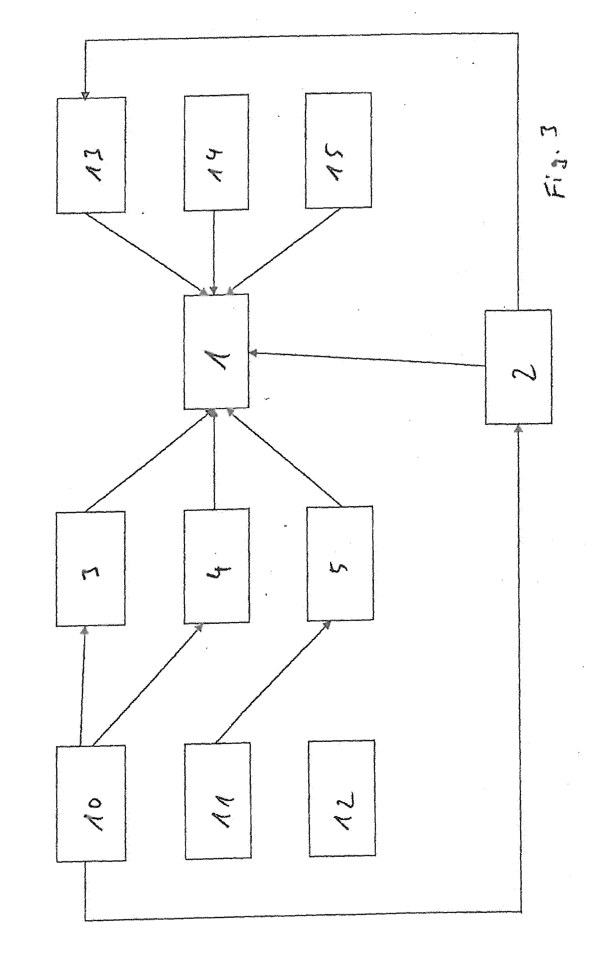

Figur 3 zeigt eine weitere Ausführungsform eines erfindungsgemäßen Verfahrens. Bei dieser wir eine Postsendung nicht von einem lokal der Aufnahmeeinrichtung 1 zugeordneten Person aufgegeben. Die Postsendung wird vielmehr von einem von der Aufnahmeeinrichtung 1 entfernten Versender 10, 11, 12 aufgegeben. Hierbei wird die Postsendung an einen Logistikdienstleister 3, 4, 5 übergeben bzw. von diesem abgeholt. Anschließend stellt der Logistikdienstleister 3, 4, 5 die Postsendung zu durch einlegen in die Aufnahmeeinrichtung 1. Nun kann der berechtigte Empfänger 13, 14, 15 die Sendung entnehmen.

Die Besonderheit besteht darin, dass das Verfahren nicht auf eine unmittelbar einem bestimmten Logistikdienstleister zugeordnete Aufnahmeeinrichtung angewiesen ist. Die Schlüsselverwaltung durch das Hintergrundsystem 2 erlaubt es vielmehr, dass unterschiedliche Logistikdienstleister 3, 4, 5 ein und dieselbe Aufnahmeeinrichtung 1 benutzen können.

Der Versender 10 möchte beispielsweise ein Paket an den Empfänger 13 verschicken. Er meldet diese Postdienstleistung beim Hintergrundsystem 2 und/oder bei beliebigen Logistikdienstleistern 3, 4, welche die Postdienstleistung wiederum beim Hintergrundsystem 2 anmelden, an. Die Aufnahmeeinrichtung 1 wird dann, beispielsweise in einem bestimmten Zeitfenster, mit der Postdienstleistung verknüpft. Das Hintergrundsystem kann an die Logistikdienstleister 3, 4 einen Schlüssel zum Zugriff auf die Aufnahmeeinrichtung 1 übermitteln. Die Aufnahmeeinrichtung 1 kann aber auch offen sein, so dass das Paket jederzeit eingelegt werden kann. Das Einlegen eines Pakets kann registriert werden, beispielsweise über entsprechende Sensoren, woraufhin die Aufnahmeeinrichtung 1 automatisch verschlossen werden kann. Das Hintergrundsystem 2 kann an den berechtigten Empfänger 13 einen Schlüssel zum Zugriff auf die Aufnahmeeinrichtung 1 übermitteln. Der Empfänger 13 kann aber auch bereits über einen Schlüssel verfügen, beispielsweise wenn die Aufnahmeeinrichtung 1 ausschließlich ihm alleine zugeordnet ist.

Die Besonderheit besteht nun darin, dass sowohl der Versender 10 als auch der Empfänger 13 einen beliebigen Logistikdienstleister 3, 4, 5 zur Ausführung der Postdienstleistung auswählen können. Diese können parallel einen Auftrag zur Ausführung der Postdienstleistung erhalten, wobei derjenige Logistikdienstleister den Zuschlag erhält, welcher zuerst die Postsendung beim Versender 10 abholt.

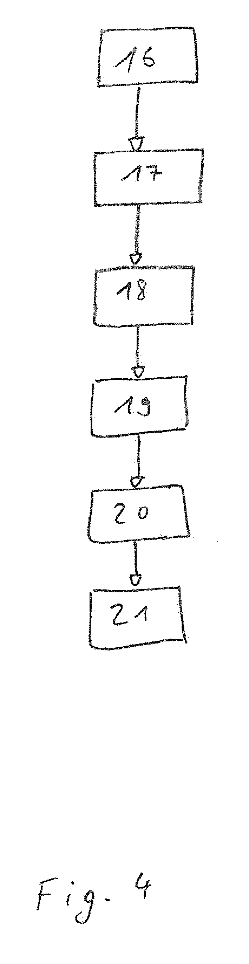

Figur 4 zeigt beispielhaft einen möglichen Ablaufplan einer Variante des erfindungsgemäßen Verfahrens. In einem Schritt 16 legt ein Versender eine Postsendung in die Aufnahmeeinrichtung 1 ein. Im Schritt 17 verschließt der Versender die Tür der Aufnahmeeinrichtung 1. Nun erfolgt im Schritt 18 automatisch eine Registrierung, beispielsweise im Hintergrundsystem 2, dass die Postsendung eingelegt worden ist. Im Schritt 19 wird nun ein Schlüssel zum Öffnen der Aufnahmeeinrichtung 1 direkt an den Empfänger der Postsendung übermittelt.

In einem nachfolgenden Schritt 20 empfängt der Empfänger den Schlüssel und wählt aus einer Vielzahl von möglichen Logistikdienstleistern zumindest einen aus. Er übermittelt diesem Logistikdienstleister den Schlüssel. In einem nachfolgenden Schritt 21 benutzt dann der Logistikdienstleister den ihm vom Empfänger übermittelten Schlüssel dazu, die Aufnahmeeinrichtung zu öffnen und die Postsendung zu entnehmen. Anschließend stellt der Logistikdienstleister dem Empfänger die Postsendung zu.

### Bezugszeichenliste

- 1: Aufnahmeeinrichtung
- 2: Hintergrundsystem
- 3: Logistikdienstleister
- 4: Logistikdienstleister
- 5: Logistikdienstleister
- 6: Schritt
- 7: Schritt
- 8: Schritt
- 9: Schritt
- 10: Versender
- 11: Versender
- 12: Versender
- 13: Empfänger
- 14: Empfänger
- 15: Empfänger
- 16: Schritt
- 17: Schritt
- 18: Schritt
- 19: Schritt
- 20: Schritt
- 21: Schritt

## Patentansprüche

1. Verfahren zum Betrieb einer Aufnahmeeinrichtung für insbesondere großvolumige Postsendungen wie Pakete, wobei ein Versender einer Postsendung eine Postdienstleistung unter Verwendung der Aufnahmeeinrichtung bei einem Hintergrundsystem anmeldet, wobei das Hintergrundsystem die angemeldete Postdienstleistung mit der Aufnahmeeinrichtung verknüpft und ein Auftrag für die Postdienstleistung an einen oder mehrere Logistikdienstleister übermittelt wird, wobei dem Logistikdienstleister, einem Empfänger und/oder dem Versender ein Schlüssel zum Öffnen und/oder Schließen der Aufnahmeeinrichtung übermittelt wird, wobei der Schlüssel nach einer Ausführung der Postdienstleistung für eine weitere Verwendung automatisch gesperrt wird.

2. Verfahren nach Anspruch 1, **dadurch gekennzeichnet, dass** der Schlüssel als Datensatz übermittelt wird.

3. Verfahren nach Anspruch 2, **dadurch gekennzeichnet, dass** der Datensatz derart ausgebildet ist, dass er von unterschiedlichen mobilen Endgeräten gelesen werden kann.

4. Verfahren nach Anspruch 2 oder 3, **dadurch gekennzeichnet, dass** der Datensatz in unterschiedlich ausgebildeten mobilen Endgeräten des Logistikdienstleisters, des Empfängers und/oder des Versenders empfangen und gelesen wird.

5. Verfahren nach einem der vorangehenden Ansprüche, **dadurch gekennzeichnet, dass** nach einem Einlegen und/oder einer Entnahme der Postsendung in bzw. aus der Aufnahmeeinrichtung der Schlüssel lokal in der Aufnahmeeinrichtung selbst für eine weitere Verwendung automatisch gesperrt wird.

6. Verfahren nach einem der vorangehenden Ansprüche, **dadurch gekennzeichnet, dass** nach einem Einlegen und/oder einer Entnahme der Postsendung in bzw. aus der Aufnahmeeinrichtung der Schlüssel durch das Hintergrundsystem für eine weitere Verwendung automatisch gesperrt wird.

7. Verfahren nach Anspruch 6, **dadurch gekennzeichnet, dass** das Hintergrundsystem nach einem Einlegen und/oder einer Entnahme der Postsendung in bzw. aus der Aufnahmeeinrichtung automatisch einen Sperrbefehl für den verwendeten Schlüssel an den Logistikdienstleister, den Empfänger und/oder den Versender übermittelt.

8. Verfahren nach einem der vorangehenden Ansprüche, **dadurch gekennzeichnet, dass** das Hintergrundsystem an den Logistikdienstleister, den Empfänger und/oder den Versender einen Basisschlüssel übermittelt, wobei ein Zugriff auf die Aufnahmeeinrichtung eine Kombination des Schlüssels mit dem Basisschlüssel erfordert.

9. Verfahren nach Anspruch 8, **dadurch gekennzeichnet, dass** der Basisschlüssel eine zeitlich festgelegte Gültigkeit aufweist.

10. Verfahren nach einem der vorangehenden Ansprüche, **dadurch gekennzeichnet, dass** dem Versender einer Postsendung mehrere unterschiedliche Logistikdienstleister zur Auswahl angeboten werden.
